# EUROPÄISCHE PATENTSCHRIFT

(11) **EP 3 408 719 B1**
(45) Veröffentlichungstag und Bekanntmachung des Hinweises auf die Patenterteilung: **14.04.2021**
(21) Anmeldenummer: 17700152.6
(22) Anmeldetag: 03.01.2017
(51) Int. Cl.: G05D 1/02

(54) **VERFAHREN ZUM ERSTELLEN EINER UMGEBUNGSKARTE FÜR EIN SELBSTTÄTIG VERFAHRBARES BEARBEITUNGSGERÄT**
METHOD FOR CREATING AN ENVIRONMENT MAP FOR AN AUTOMATICALLY MOVEABLE PROCESSING DEVICE
PROCÉDÉ DE CRÉATION D'UNE CARTE D'ENVIRONNEMENT POUR UN APPAREIL DE TRAITEMENT À DÉPLACEMENT AUTONOME

(30) Priorität: 28.01.2016 DE 102016101552
(43) Veröffentlichungstag der Anmeldung: 05.12.2018
(73) Patentinhaber: Vorwerk & Co. Interholding GmbH, 42275 Wuppertal (DE)
(72) Erfinder: HELMICH, Martin, 47055 Duisburg (DE)
(74) Vertreter: Müller, Enno
(86) Internationale Anmeldenummer: PCT/EP2017/050055
(87) Internationale Veröffentlichungsnummer: WO 2017/129379

(56) Entgegenhaltungen:
- DE-A1-102008 014 912
- US-A1- 2005 071 046
- US-A1- 2005 125 098
- US-A1- 2007 188 615
- US-A1- 2014 218 517

## Beschreibung

### Gebiet der Technik

Die Erfindung betrifft ein Verfahren zum Erstellen einer Umgebungskarte für ein selbsttätig verfahrbares Bearbeitungsgerät, insbesondere für einen Reinigungsroboter, wobei eine Detektionseinrichtung des Bearbeitungsgerätes Hindernisse in der Umgebung des Bearbeitungsgerätes detektiert und eine Umgebungskarte des Bearbeitungsgerätes anhand detektierter Hindernisdaten der Hindernisse erstellt wird, wobei mindestens ein Zusatzsensor (6) Hindernisse (3, 4, 5) in der Umgebung des Bearbeitungsgerätes (1) detektiert, wobei der Abstand des Zusatzsensors (6) zu dem Bearbeitungsgerät (1) verändert wird und wobei die von dem Zusatzsensors (6) detektierten Hindernisdaten mit den von der Detektionseinrichtung (2) des Bearbeitungsgerätes (1) detektierten Hindernisdaten in der Umgebungskarte kombiniert werden.

Darüber hinaus betrifft die Erfindung ein System zum Erstellen einer Umgebungskarte für ein selbsttätig verfahrbares Bearbeitungsgerät, insbesondere einen Reinigungsroboter, welches System ein Bearbeitungsgerät mit einer Detektionseinrichtung zur Detektion von Hindernissen in der Umgebung des Bearbeitungsgerätes aufweist, sowie mindestens einen zu dem Bearbeitungsgerät (1) beabstandbaren Zusatzsensor (6) zur Detektion von Hindernissen (3, 4, 5) in der Umgebung des Bearbeitungsgerätes (1) aufweist, wobei das System eine Datenverarbeitungseinrichtung aufweist, welche Kommunikationsverbindungen zu der Detektionseinrichtung (2) und dem Zusatzsensor (6) aufweist und welche eingerichtet ist, von dem Zusatzsensor (6) detektierte Hindernisdaten mit von der Detektionseinrichtung (2) detektierte Hindernisdaten zu einer gemeinsamen Umgebungskarte zu kombinieren.

### Stand der Technik

Verfahren zum Erstellen einer Umgebungskarte für ein selbsttätig verfahrbares Bearbeitungsgerät sind bekannt.

Die Veröffentlichungsschrift US 2007/188615 A1 offenbart ein Überwachungssystem aus mindestens einer ortsfesten Kamera und einem selbsttätig verfahrbaren Gerät mit einer mobilen Kamera, die über ein Kommunikationsnetzwerk miteinander verbunden sind. Wenn eine ortsfeste Kamera eine Abnormalität der Umgebung feststellt, wird das selbsttätig verfahrbare Gerät an diesen Ort verfahren. Zu diesem Zweck erhält es eine Route und nimmt selbst ein Bild der Umgebung in diesem Bereich auf. Aus den Bildern wird der Ort der Abnormalität errechnet und auf einer Karte dargestellt.

Die Druckschriften DE 10 2008 014 912 A1 und DE 10 2011 000 250 A1 offenbaren ein selbsttätig verfahrbares Bodenstaub-Aufsammelgerät mit einer Hinderniserkennung, welche ein optisches Triangulationssystem mit einer Lichtquelle und einer Empfängereinheit aufweist. Beim Befahren eines Raumes misst das Triangulationssystem die Entfernung zu einem Hindernis, welche als Grundlage für die Erstellung einer Umgebungskarte dienen kann. Abhängig von einem gemessenen Abstand zu einem Hindernis kann das Bodenstaub-Aufsammelgerät durch angemessene Rangier- und Ausweichbewegungen reagieren, um nicht mit dem Hindernis zu kollidieren.

Das Triangulationssystem misst Hindernisse in einer der Triangulationseinrichtung zugeordneten Detektionsebene, welche im Wesentlichen durch den Strahlengang von der Lichtquelle zu der Empfängereinheit vorgegeben ist. Diese Detektionsebene kann gegebenenfalls auch in Bezug auf eine vertikale Richtung aufgeweitet sein, so dass die Detektionsebene einen bestimmten Höhenbereich umfasst.

Die von der Detektionseinrichtung in der Detektionsebene gemessenen Hindernisse sind für einen Nutzer des Bearbeitungsgerätes in einer Umgebungskarte schwer zu deuten, da die Detektionseinrichtung beispielsweise die Beine eines Stuhls als separate Hindernisse detektiert und nicht den Stuhl in seiner Gesamtheit.

### Zusammenfassung der Erfindung

Es ist daher Aufgabe der Erfindung, eine Umgebungskarte für die Umgebung des Bearbeitungsgerätes zu erstellen, welche für einen Nutzer optimal, insbesondere intuitiv, zu lesen ist.

Zur Lösung dieser Aufgabe schlägt die Erfindung vor, dass ein Abstand zwischen der Detektionseinrichtung des Bearbeitungsgerätes und dem Zusatzsensor gemessen wird, wobei der Abstand von dem Zusatzsensor gemessen wird, während der Zusatzsensor ausgehend von dem Ort der Detektionseinrichtung an eine gewünschte Position verlagert wird.

Gemäß der Erfindung wird ein Abstand zwischen der Detektionseinrichtung des Bearbeitungsgerätes und dem Zusatzsensor gemessen. Anhand des Betrages dieses Abstandes und gegebenenfalls auch einer räumlichen Richtungsinformation zwischen dem Bearbeitungsgerät und dem Zusatzsensor, können die Hindernisdaten der Detektionseinrichtung und des Zusatzsensors miteinander in Beziehung gebracht werden. Eine mittels der Detektionseinrichtung bestimmte Position innerhalb des Raumes kann somit einer mittels des Zusatzsensors gemessenen Position des Raumes zugeordnet werden, so dass verschiedene Hindernisdaten ein und desselben Hindernisses miteinander kombiniert werden können. Beispielsweise ergibt eine Kombination einer Information über vier Stuhlbeine und einer Information über eine Sitzfläche einen Stuhl mit einer definierten Position innerhalb des Raumes. Der Abstand zwischen der Detektionseinrichtung und dem Zusatzsensor wird von dem Zusatzsensor gemessen, während der Zusatzsensor ausgehend von dem Ort der Detektionseinrichtung an eine gewünschte Position verlagert wird, wobei der Abstand insbesondere mittels eines Beschleunigungssensors des Zusatzsensors ermittelt wird. Vor der Installation des Zusatzsensors an einer gewünschten Position innerhalb des Raumes oder alternativ auch vor jeder Messung mittels des Zusatzsensors wird der Zusatzsensor ausgehend von der Detektionseinrichtung des Bearbeitungsgerätes an die gewünschte Position verlagert, wobei der Abstand und vorteilhaft insbesondere auch die Raumrichtung der Verlagerung gemessen werden. Beispielsweise kann das Bearbeitungsgerät eine Aufnahme für den Zusatzsensor aufweisen, in welcher der Zusatzsensor üblicherweise an dem Bearbeitungsgerät angeordnet ist und aus welcher der Zusatzsensor für die Erstellung einer Umgebungskarte gelöst wird und an die gewünschte Position verlagert wird. Ebenso kann das Bearbeitungsgerät auch eine Aufnahme für mehrere Zusatzsensoren aufweisen, welche unabhängig voneinander verlagert werden können. Alternativ kann der Zusatzsensor jedoch auch ein externer Sensor sein, welcher grundsätzlich nicht mit dem Bearbeitungsgerät gekoppelt ist. Ein solcher Zusatzsensor wird dann zunächst zu der Detektionseinrichtung des Bearbeitungsgerätes verlagert. Daraufhin wird die Abstandsmessung gestartet und der Zusatzsensor von der Detektionseinrichtung an die gewünschte Position innerhalb des Raumes verlagert.

Das Erstellen der Umgebungskarte erfolgt nicht nur anhand der von der Detektionseinrichtung des Bearbeitungsgerätes erfassten Hindernisdaten der Hindernisse, sondern zusätzlich auch anhand von einem Zusatzsensor detektierter Hindernisdaten. Durch die Kombination der Hindernisdaten des Zusatzsensors und der Hindernisdaten der Detektionseinrichtung des Bearbeitungsgerätes kann die Umgebungskarte aus einer größeren Vielzahl von Hindernisdaten und ebenso auch unterschiedlichen Arten von Hindernisdaten erstellt werden. Dadurch kann das jeweilige Hindernis in der Umgebungskarte auf eine Art und Weise dargestellt werden, welche der optischen Wahrnehmung eines Nutzers des Bearbeitungsgerätes möglichst realitätsnah entspricht. Beispielsweise detektiert die Detektionseinrichtung des Bearbeitungsgerätes nach wie vor die einzelnen Hindernisteile eines Hindernisses in der Detektionsebene der Detektionseinrichtung, d. h. beispielsweise die Beine eines Stuhls, während der Zusatzsensor das Hindernis, nämlich den Stuhl, als Ganzes (beispielsweise als perspektivisches Bild) detektiert, so dass eine Kombination der Hindernisdaten insgesamt zu einer realitätsnahen Darstellung des Hindernisses in der Umgebungskarte führt. Dabei kann entweder nur ein Zusatzsensor zur Anwendung kommen oder mehrere Zusatzsensoren, welche insbesondere gleichzeitig arbeiten. Bei der Verwendung nur eines Zusatzsensors kann dieser beispielsweise für aufeinanderfolgende Detektionen in Bezug auf seinen Abstand zu den Hindernissen und/oder zu dem Bearbeitungsgerät und/oder in Bezug auf seine Perspektive verändert werden. Die Veränderung kann dabei beispielsweise durch eine Verlagerung des Zusatzsensors oder durch eine Verlagerung des Bearbeitungsgerätes hervorgerufen werden. Beispielsweise können auch mehrere Zusatzsensoren ortsfest innerhalb eines Raumes angeordnet sein, in welchem das Bearbeitungsgerät umherfährt.

Es wird vorgeschlagen, dass der Zusatzsensor die Hindernisse aus einer von der Perspektive der Detektionseinrichtung des Bearbeitungsgerätes abweichenden Perspektive, insbesondere in einer Draufsicht auf die Hindernisse, detektiert. Durch die Detektion der Hindernisse aus unterschiedlichen Perspektiven können verschiedene Hindernisdaten von dem Hindernis zusammengetragen werden, welche in Kombination eine realitätsnahe Darstellung des Hindernisses in der Umgebungskarte ermöglichen. Aus einer ersten Perspektive, beispielsweise der Perspektive der Detektionseinrichtung des Bearbeitungsgerätes, werden beispielsweise vier einzelne Hindernisse erkannt, welche zusammen die Ecken eines Rechtecks bilden. Aus einer zweiten Perspektive, beispielsweise der Perspektive des Zusatzsensors, wird des Weiteren in dem Flächenbereich zwischen den von der Detektionseinrichtung detektierten nur einzelnen Hindernissen eine geschlossene Fläche (beispielsweise Sitzfläche) detektiert, welche bei einer Kombination der Hindernisdaten auf einen Stuhl oder zumindest einen Hocker, schließen lässt. In der Umgebungskarte kann entsprechend ein Stuhl bzw. Hocker dargestellt werden, so dass der Nutzer in der Umgebungskarte ohne weitere Überlegungen einen Stuhl und ebenfalls auch andere Möbelstücke erkennen kann und beispielsweise das Bearbeitungsgerät für eine Spotreinigung genau an diese Stelle führen kann.

Als Perspektive für den Zusatzsensor bietet sich insbesondere eine Draufsicht auf die Hindernisse an, da hier geschlossene Flächenbereiche erkannt werden können, die die Detektionseinrichtung des Bearbeitungsgerätes in ihrer Detektionsebene nicht wahrnehmen kann. Insbesondere kann aus der Perspektive des Zusatzsensors auch eine Höhe eines Hindernisses bestimmt werden, welche eine Information darüber gibt, ob das Bearbeitungsgerät unter diesem Hindernis hindurchfahren kann oder nicht. Besonders vorteilhaft wird der zu kartographierende Bereich, beispielsweise ein Raum einer Wohnung, aus verschiedenen Perspektiven detektiert, indem entweder ein Zusatzsensor zeitlich nacheinander an verschiedenen Positionen montiert wird oder mehrere Zusatzsensoren ortsfest angeordnet sind und vorteilhaft zeitgleich detektieren. Die Hindernisdaten aus den verschiedenen Perspektiven können anschließend zusammen mit den von dem Bearbeitungsgerät aufgenommenen Hindernisdaten zu einer virtuellen Umgebungskarte kombiniert werden, welche sowohl eine bestmögliche Bearbeitung des Bereiches durch das Bearbeitungsgerät ermöglicht, insbesondere auch unter Hindernissen, als auch eine optimale Orientierung des Nutzers in der Umgebungskarte ermöglicht.

Des Weiteren wird vorgeschlagen, dass der Zusatzsensor Bilddaten der Umgebung des Bearbeitungsgerätes erfasst. Der Zusatzsensor weist dabei vorteilhaft einen Kamerachip, wie beispielsweise einen CCD-Chip oder CMOS-Chip auf. Die Hindernisdaten können somit direkt als Bilddaten, insbesondere auch als Farbinformationen enthaltende RGB-Daten, erfasst werden, welche besonders vorteilhaft in die Umgebungskarte des Bearbeitungsgerätes eingebunden werden können. Dadurch wird es gleichzeitig auch möglich, die Hindernisdaten der Detektionseinrichtung mit den Bilddaten des Zusatzsensors zu kombinieren, um beispielsweise die Größe und/oder Farbe des Bearbeitungsgerätes und/oder der Hindernisse in dem Bild darzustellen. Darüber hinaus kann die abgebildete Größe beispielsweise auch mit den bekannten Dimensionen des Bearbeitungsgerätes verglichen werden, um daraus die Größe, insbesondere Höhe, von Hindernissen besser abschätzen zu können.

Gemäß einer zweiten Variante wird vorgeschlagen, dass der Abstand mittels der Detektionseinrichtung des Bearbeitungsgerätes, insbesondere mittels eines Laserdistanzsensors, besonders bevorzugt mittels einer Triangulationsmesseinrichtung, gemessen wird. Sofern es sich bei der Detektionseinrichtung des Bearbeitungsgerätes um eine solche handelt, welche nur innerhalb einer einzigen Detektionsebene misst, kann der Nutzer das Bearbeitungsgerät und/oder die Detektionseinrichtung für die Messung des Abstandes zu dem Zusatzsensor manuell neigen bis der Zusatzsensor in der Detektionsebene der Detektionseinrichtung liegt. Der Neigungswinkel des Bearbeitungsgerätes bzw. der Detektionseinrichtung gibt einen Hinweis über die räumliche Orientierung des Zusatzsensors. Alternativ kann der Abstand jedoch ohne weitere Maßnahmen gemessen werden, wenn der Zusatzsensor ohnehin in der Detektionsebene der Detektionseinrichtung angeordnet ist, weil die Detektionsebene beispielsweise eine Ausdehnung auch in vertikaler Richtung aufweist.

Gemäß einer weiteren Variante kann vorgesehen sein, dass der Abstand zwischen der Detektionseinrichtung und dem Zusatzsensor anhand einer Größe des Bearbeitungsgerätes in einem mittels des Zusatzsensors erfassten Bild ermittelt wird. Da die Dimensionen des Bearbeitungsgerätes bekannt sind, kann der Abstand anhand der dargestellten Größe des Bearbeitungsgerätes in dem von dem Zusatzsensor aufgenommenen Bild ermittelt werden. Darüber hinaus können auch andere Weglängen innerhalb des Bildes über die bekannten Dimensionen des Bearbeitungsgerätes ermittelt oder zumindest abgeschätzt werden, beispielsweise Abstände zwischen Hindernissen und dergleichen.

Es wird vorgeschlagen, dass der Zusatzsensor bezogen auf eine vertikale Richtung in einer Ebene über einer Detektionsebene der Detektionseinrichtung des Bearbeitungsgerätes angeordnet wird, insbesondere an einer Wand oder einer Decke eines Raumes. Beispielsweise entspricht die Perspektive des Zusatzsensors einer Vogelperspektive auf die in dem Raum angeordneten Hindernisse. In Kombination mit der bodennahen Detektionsebene der Detektionseinrichtung des Bearbeitungsgerätes ergibt sich somit eine Vielzahl von Hindernisdaten aus unterschiedlichen Detektionsperspektiven, welche zu einer umfassenden Information über die in dem Raum enthaltenen Hindernisse führen. Insbesondere können dies zum einen Hindernisdaten sein, welche für das Unterfahren eines Hindernisses durch das Bearbeitungsgerät notwendig sind, und zum anderen Hindernisdaten, welche insbesondere einem Nutzer des Bearbeitungsgerätes das Auffinden der Hindernisse, insbesondere Möbel, innerhalb der Umgebungskarte ermöglichen.

Es wird vorgeschlagen, dass der Zusatzsensor eine oder mehrere der folgenden Hindernisdaten detektiert: Anzahl der Hindernisse, absolute und/ oder relative Position eines Hindernisses, Größe eines Hindernisses, Form eines Hindernisses, Farbe eines Hindernisses. Die unterschiedlichen Hindernisdaten sind dabei geeignet, die Art der Hindernisse für den Nutzer bestmöglich erkennbar zu machen. Insbesondere die realitätsgetreue Form und Farbe des Hindernisses gibt dem Nutzer eine unmittelbar verständliche Information über das Hindernis, welche er nicht durch eigene gedankliche Transformation auswerten muss. Die Größe des Hindernisses kann beispielsweise anhand der Größe des Bearbeitungsgerätes in dem Bild des Zusatzsensors ermittelt werden. Darüber hinaus kann auch eine relative Position eines Hindernisses auf diese Art und Weise auf ein anderes Hindernis oder andere charakteristische Punkte innerhalb des Raumes bezogen werden. Die Kenntnis über die Anzahl der Hindernisse spielt beispielsweise eine Rolle, wenn das Bearbeitungsgerät bezogen auf seine Detektionsebene eine Vielzahl von Hindernissen detektiert, welche sich zumindest teilweise im Detektionsbereich des Zusatzsensors als Hindernisteile ein und desselben Hindernisses darstellen. So können mittels der Detektionseinrichtung des Bearbeitungsgerätes detektierte Stuhlbeine einem einzigen Stuhl zugeordnet werden, welcher in dem Detektionsbereich des Zusatzsensors, beispielsweise in einer Draufsicht, als solcher erkennbar ist.

Schließlich wird neben dem zuvor beschriebenen Verfahren zum Erstellen einer Umgebungskarte für ein selbsttätig verfahrbares Bearbeitungsgerät ebenso ein System zum Erstellen einer Umgebungskarte für ein selbsttätig verfahrbares Bearbeitungsgerät vorgeschlagen, welches System ein Bearbeitungsgerät mit einer Detektionseinrichtung zur Detektion von Hindernissen in der Umgebung des Bearbeitungsgerätes sowie mindestens einen zu dem Bearbeitungsgerät beabstandbaren Zusatzsensor zur Detektion von Hindernissen in der Umgebung des Bearbeitungsgerätes aufweist, wobei das System eine Datenverarbeitungseinrichtung aufweist, welche Kommunikationsverbindungen zu der Detektionseinrichtung und dem Zusatzsensor aufweist und welche eingerichtet ist, von dem Zusatzsensor detektierte Hindernisdaten mit von der Detektionseinrichtung detektierten Hindernisdaten zu einer gemeinsamen Umgebungskarte zu kombinieren, wobei der Zusatzsensor eingerichtet ist, einen Abstand zwischen der Detektionseinrichtung des Bearbeitungsgerätes und dem Zusatzsensor zu messen, während der Zusatzsensor ausgehend von dem Ort der Detektionseinrichtung an eine gewünschte Position verlagert wird.

Die Detektionseinrichtung des Bearbeitungsgerätes dient dabei nach wie vor zur Erstellung eines Grundrisses des zu kartographierenden Bereiches, wobei Hindernisse in der Detektionsebene der Detektionseinrichtung detektiert werden. Die Detektionseinrichtung kann beispielsweise ein Laserdistanzsensor, insbesondere eine Triangulationsmesseinrichtung, sein. Das System verfügt neben der Detektionseinrichtung des Bearbeitungsgerätes zusätzlich über einen oder mehrere Zusatzsensoren, zum Beispiel eine oder mehrere Kameras. Der Zusatzsensor kann beispielsweise mittels einer an dem Bearbeitungsgerät angeordneten Aufnahme an dem Bearbeitungsgerät befestigt sein und für das Erstellen einer Umgebungskarte von dem Bearbeitungsgerät getrennt werden. Darüber hinaus kann der Zusatzsensor jedoch auch ein externer Sensor sein, für welchen das Bearbeitungsgerät keine Aufnahme aufweist. Der Zusatzsensor verfügt vorzugsweise über einen Beschleunigungssensor. Mit dessen Hilfe kann ein Abstand (inklusive Betrag und Richtung) zwischen der Detektionseinrichtung und dem Montageort des Zusatzsensors gemessen werden. Der Zusatzsensor verfügt vorzugsweise über eine Kommunikationseinrichtung, mit deren Hilfe die Hindernisdaten und auch die Information über den gemessenen Abstand an eine Auswerteeinrichtung übertragen werden. Die Auswerteeinrichtung kann in dem Bearbeitungsgerät oder auch auf einem anderen Gerät, wie beispielsweise einem PC, einem Laptop oder dergleichen ausgebildet sein.

### Kurze Beschreibung der Zeichnungen

Im Folgenden wird die Erfindung anhand von Ausführungsbeispielen näher erläutert. Es zeigen:
- Fig. 1: einen Raumbereich mit einem Bearbeitungsgerät und mehreren Hindernissen,
- Fig. 2: den Raumbereich mit Hindernisdaten über die in einer Detektionsebene des Bearbeitungsgerätes detektierten Hindernisse,
- Fig. 3: ein System mit einem Bearbeitungsgerät und einem Zusatzsensor,
- Fig. 4: den in Figur 1 dargestellten Raumbereich mit dem Bearbeitungsgerät und dem Zusatzsensor,
- Fig. 5: den Raumbereich mit von dem Zusatzsensor detektierten Hindernissen und Bearbeitungsgerät.

### Beschreibung der Ausführungsformen

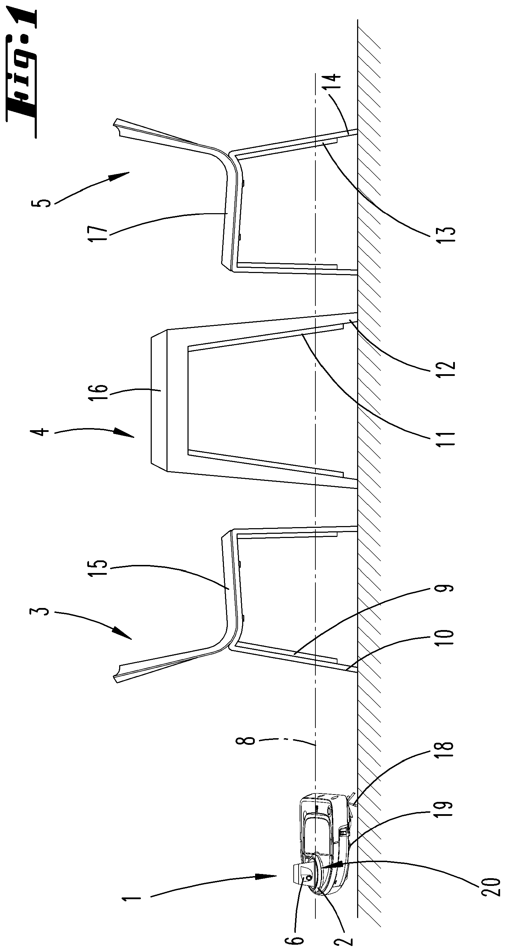

Figur 1 zeigt einen zu kartographierenden Raumbereich, hier beispielsweise einen Teil einer Küche. Ein Bearbeitungsgerät 1, welches hier als selbsttätig verfahrbarer Saugroboter ausgebildet ist, verfährt in dem Raumbereich und übt dabei eine Reinigungsaufgabe aus. Das Bearbeitungsgerät 1 verfügt über eine Detektionseinrichtung 2, welche beispielsweise als Triangulationsmesseinrichtung ausgebildet ist. Die Detektionseinrichtung 2 ist dabei insbesondere so ausgebildet und eingerichtet, dass Messungen innerhalb einer Detektionsebene 8 über einen Winkelbereich von 360 Grad, d. h. rund um das Bearbeitungsgerät, ausgeführt werden können. Die Detektionsebene 8 liegt hier beispielsweise ca. 10 cm über der Ebene einer zu reinigenden Fläche, auf welcher das Bearbeitungsgerät 1 verfährt. Das Gehäuse des Bearbeitungsgerätes 1 weist eine der Detektionseinrichtung 2 zugeordnete Öffnung 20 auf, durch welche ein zur Messung verwendeter Lichtstrahl austreten bzw. eintreten kann. Die Triangulationsmesseinrichtung funktioniert so, dass der von dem Laser der Triangulationsmesseinrichtung emittierte Lichtstrahl durch die Öffnung 20 aus dem Bearbeitungsgerät 1 austritt und den zu kartographierenden Raumbereich über den 360 Grad-Winkelbereich abscannt. Wenn der Lichtstrahl auf ein Hindernis 3, 4, 5 trifft, wird zumindest ein Anteil reflektiert und trifft auf einen Sensor der Detektionseinrichtung 2, beispielsweise einen CCD- oder CMOS-Chip. Abhängig von einem Abstand zwischen der Detektionseinrichtung 2 und dem den Lichtstrahl reflektierenden Hindernis 3, 4, 5 trifft der zurückreflektierte Anteil an einer anderen Position auf den Chip. Anhand dieser Position kann die Entfernung des Hindernisses 3, 4, 5 bestimmt werden.

Neben der Detektionseinrichtung 2 verfügt das Bearbeitungsgerät 1 über einen Zusatzsensor 6, welcher beispielsweise über eine Aufnahme (nicht dargestellt) an dem Bearbeitungsgerät 1 gehalten ist. Hier ist der Zusatzsensor 6 beispielsweise auf das Bearbeitungsgerät 1 aufgesetzt, nämlich in vertikaler Richtung über der Detektionseinrichtung 2. Der Zusatzsensor 6 weist einen CCD- oder CMOS-Chip auf und verfügt über eine drahtlose Kommunikationseinrichtung, über welche von dem Zusatzsensor 6 aufgenommene Hindernisdaten an eine Auswerteeinrichtung übermittelt werden können. Hier ist die Auswerteeinrichtung beispielsweise in dem Bearbeitungsgerät 1 selbst angeordnet (nicht dargestellt).

Des Weiteren verfügt das Bearbeitungsgerät 1 in üblicher Art und Weise über Räder 19 zur selbsttätigen Fortbewegung des Bearbeitungsgerätes 1 durch den zu kartographierenden Raumbereich. Bürsten 18 dienen dabei zur Unterstützung der Reinigungswirkung.

In dem dargestellten Raumbereich sind mehrere Hindernisse 3, 4, 5 angeordnet, nämlich zwei Stühle und ein Tisch. Die Hindernisse 3, 4, 5 verfügen über mehrere Hindernisteile 9 bis 14, welche sich in die Detektionsebene 8 der Detektionseinrichtung 2 des Bearbeitungsgerätes 1 erstrecken, sowie über Hindernisflächenbereiche 15, 16, 17, welche außerhalb (nämlich über) der Detektionsebene 8 der Detektionseinrichtung 2 liegen.

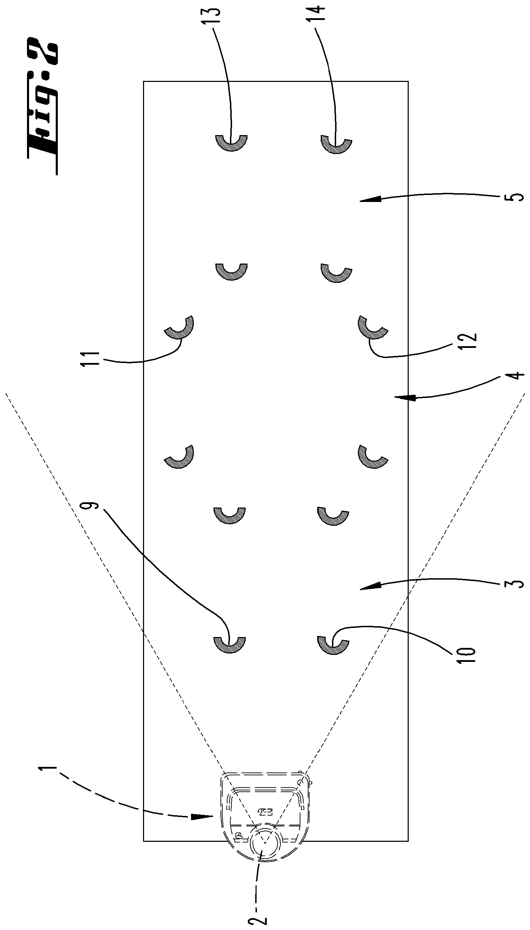

Figur 2 zeigt die Hindernisse 3, 4, 5 auf eine Art und Weise, wie diese durch die Detektionseinrichtung 2 des Bearbeitungsgerätes 1 in der Detektionsebene 8 detektiert werden. Da von den Hindernissen 3, 4, 5 lediglich die Hindernisteile 9 bis 14 in die Detektionsebene 8 ragen, können auch nur diese detektiert werden. Die außerhalb der Detektionsebene 8 liegenden Hindernisflächenbereiche 15, 16, 17 werden dagegen nicht von der Detektionseinrichtung 2 wahrgenommen. Lediglich die Hindernisteile 9 bis 14 ragen in die Detektionsebene 8 der Detektionseinrichtung 2. Diese werden aufgrund des veränderlichen Messwinkels der Detektionseinrichtung 2 als Teilkreisbögen detektiert. Die dargestellten Hindernisteile 9 bis 14 sind hier die Beine der Hindernisse 3, 4, 5, nämlich Stuhlbeine und Tischbeine. In der Figur 2 ist das Bearbeitungsgerät 1 lediglich informationshalber dargestellt. Dies wird von der Detektionseinrichtung 2 selbstverständlich nicht detektiert und ist daher gestrichelt dargestellt. Die mittels der Detektionseinrichtung 2 erlangten Hindernisdaten enthalten Informationen über die Größe und Position der Hindernisteile 9 bis 14 in der Detektionsebene 8. Die Hindernisdaten enthalten jedoch keine Information über Parameter außerhalb der Detektionsebene 8, beispielsweise eine weitere Formgebung der Hindernisse 3, 4, 5 bzw. der Hindernisteile 9 bis 14, insbesondere in senkrecht zu der Detektionsebene 8 stehender Richtung. Darüber hinaus ist es auch nicht bekannt, ob alle oder einige der Hindernisteile 9 bis 14 zu demselben Hindernis 3, 4, 5 gehören oder jedes Hindernisteil 9 bis 14 ein separates Hindernis 3, 4, 5 definiert.

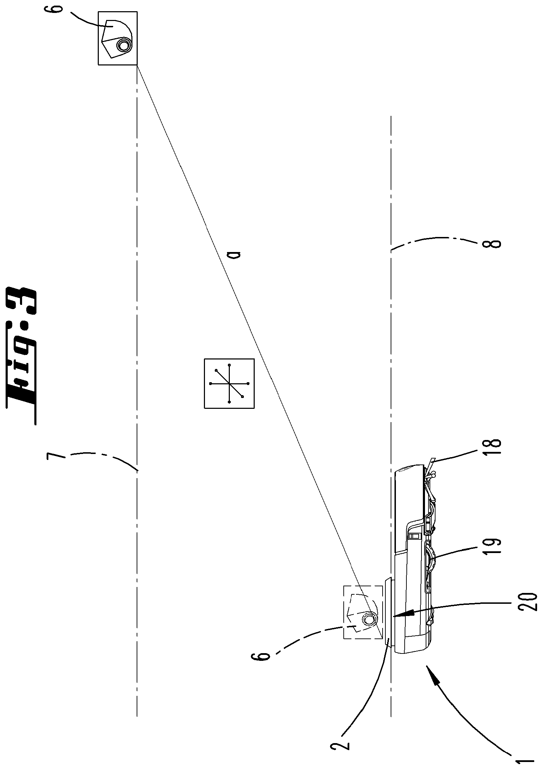

Figur 3 zeigt ein erfindungsgemäßes System mit dem Bearbeitungsgerät 1 und dem Zusatzsensor 6. Hier ist der Zusatzsensor 6 von der Ausgangsposition auf dem Bearbeitungsgerät 1 (gestrichelt dargestellt) an eine gewünschte Position innerhalb des Raumbereiches verlagert, hier beispielsweise in einen Übergangsbereich zwischen einer Wand und einer Decke eines Raumes. In dieser Position ist der Zusatzsensor 6 in einer Ebene 7 des Raumbereiches angeordnet, welche parallel zu der Detektionsebene 8 liegt. Der Detektionsbereich des Zusatzsensors 6 ist jedoch nicht auf die Ebene 7 beschränkt. Vielmehr weist der als Kamera ausgebildete Zusatzsensor 6 einen räumlichen Detektionsbereich auf, welcher einer Draufsicht auf die Hindernisse 3, 4, 5 entspricht. In der dargestellten Position weist der Zusatzsensor 6 zu der Detektionseinrichtung 2 des Bearbeitungsgerätes 1 einen Abstand a auf. Dieser Abstand a weist Komponenten in drei Raumrichtungen des zu kartographierenden Raumbereiches auf. Die Messung des Abstandes a erfolgt mittels eines dem Zusatzsensor 6 zugeordneten Beschleunigungssensors. Während ein Nutzer des Bearbeitungsgerätes 1 den Zusatzsensor 6 von der gestrichelt dargestellten Position auf dem Bearbeitungsgerät 1 zu der Position an der Wand/Decke des Raumbereiches verlagert, misst der Bewegungssensor die Richtung und den Betrag des Abstandes a relativ zu der Detektionseinrichtung 2. Somit ist die Position des Zusatzsensors 6 relativ zu dem Bearbeitungsgerät 1 bekannt. Darüber hinaus kann auch die absolute Position des Zusatzsensors 6 in dem zu kartographierenden Raumbereich bestimmt werden, wenn entsprechend die Position des Bearbeitungsgerätes 1 in dem Raumbereich bekannt ist.

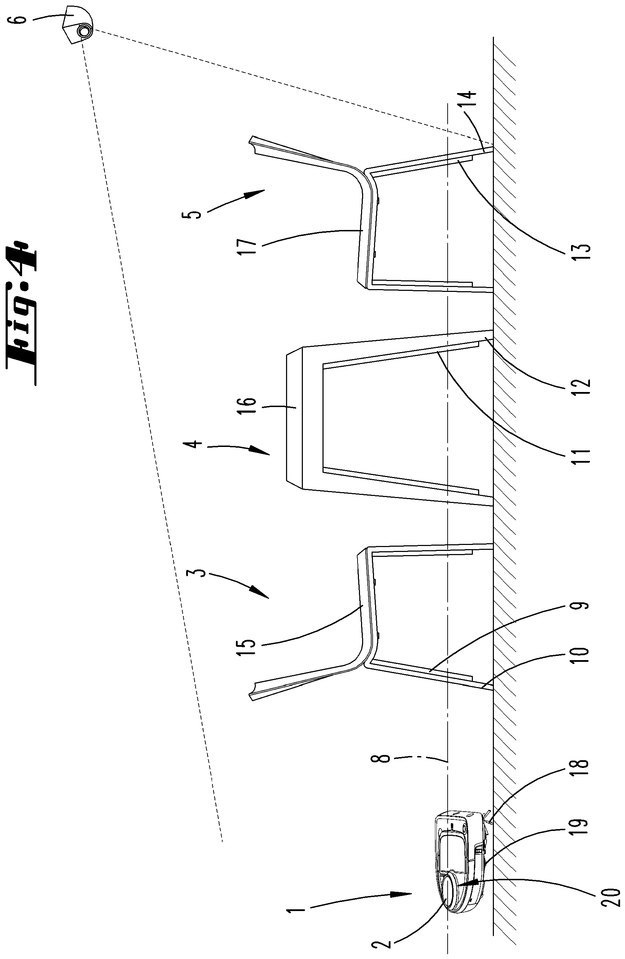

Figur 4 zeigt schematisch den Detektionsbereich des Zusatzsensors 6 in dem zu kartographierenden Raumbereich. Erkennbar verfügt der Zusatzsensor 6 über einen dreidimensionalen Detektionsbereich, welcher die in dem Raumbereich angeordneten Hindernisse 3, 4, 5 von rechts oben (bezogen auf die Darstellung) erfasst. In diesem Detektionsbereich ist auch das Bearbeitungsgerät 1 angeordnet. Erkennbar überlappen sich der Detektionsbereich des Zusatzsensors 6 und die Detektionsebene 8 der Detektionseinrichtung 2 des Bearbeitungsgerätes 1. Der Zusatzsensor 6 detektiert jedoch auch Teilbereiche der Hindernisse 3, 4, 5, welche sich nicht in der Detektionsebene 8 erstrecken oder diese schneiden. Hierzu zählen beispielsweise die Hindernisflächenbereiche 15, 16, 17, welche im Wesentlichen parallel zu der Detektionsebene 8 angeordnet sind. Bei diesen Hindernisflächenbereichen 15, 16, 17 handelt es sich um Sitzflächen der Hindernisse 3, 5 und eine Tischplatte des Hindernisses 4. Darüber hinaus erfasst der Zusatzsensor 6 auch zumindest einige der Hindernisteile 9 bis 14, welche nicht durch die Hindernisflächenbereiche 15, 16, 17 verdeckt sind. Somit detektiert der Zusatzsensor 6 insgesamt andere Hindernisdaten als die Detektionseinrichtung 2 des Bearbeitungsgerätes 1. In Kombination ergibt sich eine Fülle unterschiedlicher Hindernisdaten, welche insgesamt zu einer genaueren und durch den Nutzer leichter zu lesenden Umgebungskarte des Raumbereiches beitragen.

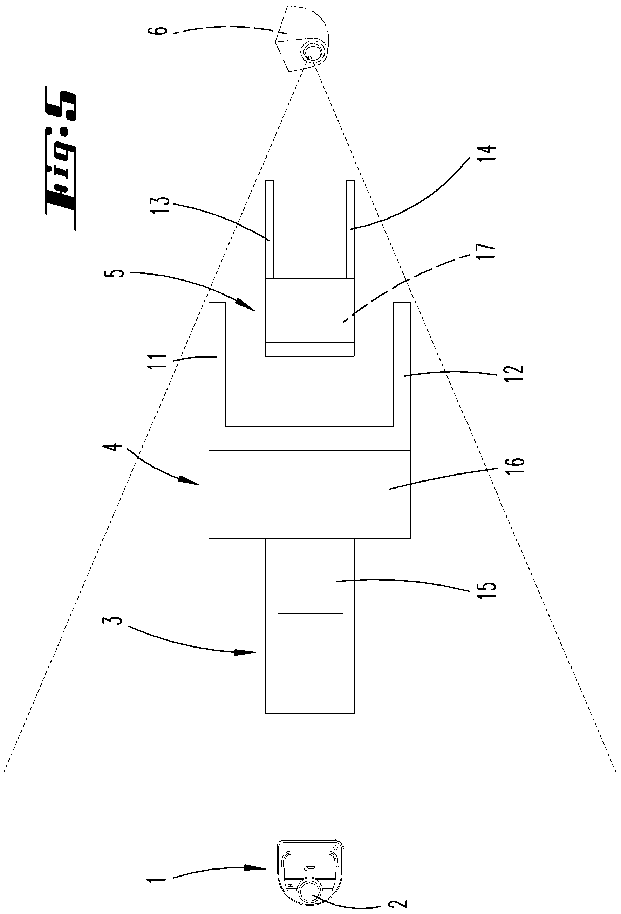

Figur 5 zeigt die Perspektive des Zusatzsensors 6 auf den von dem Detektionsbereich geschnittenen Raumbereich. Der Detektionsbereich beinhaltet zum einen das Bearbeitungsgerät 1 und zum anderen die Hindernisse 3, 4, 5. Durch die Perspektive des Zusatzsensors 6 sind das Bearbeitungsgerät 1 und die Hindernisse 3, 4, 5 entsprechend verzerrt. Darüber hinaus sind nur diejenigen Hindernisteile 9 bis 14 unter den Hindernisflächenbereichen 15, 16, 17 erkennbar, welche in Richtung des Zusatzsensors 6 weisen und nicht durch die Hindernisse 3, 4, 5 verdeckt sind. Der Zusatzsensor 6 detektiert wie aus Figur 5 ersichtlich zusätzlich die Anzahl der Hindernisse 3, 4, 5 innerhalb des detektierten Raumbereiches, die zumindest perspektivisch verzerrte Form der Hindernisse 3, 4, 5 und im Falle eines Farbsensors auch die Farbe der Hindernisse 3, 4, 5. Die absoluten und relativen Positionen der Hindernisse 3, 4, 5, die Abstände der Hindernisse 3, 4, 5, die Position des Bearbeitungsgerätes 1 und die Abstände der Hindernisse 3, 4, 5 zu dem Bearbeitungsgerät 1 sind aufgrund der perspektivischen Verzerrung nicht unmittelbar bestimmbar. Jedoch wird eine Bestimmung möglich, wenn der Zusatzsensor 6 von verschiedenen Positionen innerhalb des zu kartographierenden Raumbereiches aus misst bzw. eine Mehrzahl von Zusatzsensoren 6 an verschiedenen Raumpositionen verwendet wird.

Im Einzelnen funktioniert das Erstellen einer Umgebungskarte mittels des Systems aus dem Bearbeitungsgerät 1 und dem Zusatzsensor 6 so, dass der Nutzer des Bearbeitungsgerätes 1 das Bearbeitungsgerät 1 inklusive des darauf angeordneten Zusatzsensors 6 in den zu kartographierenden Raumbereich stellt. Anschließend trennt er den Zusatzsensor 6 von dem Bearbeitungsgerät 1 und verlagert den Zusatzsensor 6 an eine gewünschte Position, hier beispielsweise in einen Übergangsbereich zwischen der Wand und der Decke des zu kartographierenden Raumbereiches. Während der Verlagerung des Zusatzsensors 6 misst der dem Zusatzsensor 6 zugeordnete Beschleunigungssensor den Abstand a (Betrag und Richtung) zwischen dem Zusatzsensor 6 und der Detektionseinrichtung 2 des Bearbeitungsgerätes 1, konkret zu der Ausgangsposition des Zusatzsensors 6, in welcher dieser an dem Bearbeitungsgerät 1 angeordnet war. Anschließend verfährt das Bearbeitungsgerät 1 wie üblich innerhalb des zu kartographierenden Raumbereiches und misst dabei innerhalb der Detektionsebene 8 Abstände zu Hindernissen 3, 4, 5 bzw. Hindernisteilen 9 bis 14 dieser Hindernisse 3, 4, 5.

Der Zusatzsensor 6 nimmt aus seiner Position an der Wand bzw. Decke des Raumbereiches ein Bild seines Detektionsbereiches auf, welches die Hindernisse 3, 4, 5 und das Bearbeitungsgerät 1 wie in Figur 5 dargestellt enthält. Anschließend wird der Zusatzsensor 6 an verschiedene Positionen innerhalb des Raumbereiches versetzt und nimmt auch dort ein entsprechendes perspek-tivisches Bild des Raumbereiches auf. Dies kann beliebige Male wiederholt werden, wobei eine größere Anzahl von Messpositionen gleichzeitig auch die Genauigkeit der aus den Hindernisdaten erstellten Umgebungskarte erhöht.

Nachdem die Detektion mittels des Zusatzsensors 6 abgeschlossen ist, übermittelt der Zusatzsensor 6 die in den aufgenommenen Bildern enthaltenen Hindernisdaten an die Auswerteeinrichtung des Bearbeitungsgerätes 1. Dies erfolgt mittels drahtloser Kommunikation, insbesondere über eine Funkverbindung. Die Auswerteeinrichtung kombiniert die mittels der Detektionseinrichtung 2 des Bearbeitungsgerätes 1 aufgenommenen Hindernisdaten mit den von dem Zusatzsensor 6 detektierten Hindernisdaten zu einer Umgebungskarte des von dem Bearbeitungsgerät 1 befahrenen Raumbereiches. Die Umgebungskarte enthält dabei zum einen Informationen über die Positionen der Hindernisse 3, 4, 5 in dem Raumbereich, die Größe der Hindernisse 3, 4, 5, die Form der Hindernisse 3, 4, 5 und auch die Farbe der Hindernisse 3, 4, 5. Somit kann sich der Nutzer des Bearbeitungsgerätes 1 besonders leicht in der erstellten Umgebungskarte orientieren und erkennt die dort eingezeichneten Hindernisse 3, 4, 5 unmittelbar nach deren Art, beispielsweise ob es sich bei einem Hindernis 3, 4, 5 um einen Stuhl oder einen Tisch handelt.

### Liste der Bezugszeichen

- 1: Bearbeitungsgerät
- 2: Detektionseinrichtung
- 3: Hindernis
- 4: Hindernis
- 5: Hindernis
- 6: Zusatzsensor
- 7: Ebene
- 8: Detektionsebene
- 9: Hindernisteil
- 10: Hindernisteil
- 11: Hindernisteil
- 12: Hindernisteil
- 13: Hindernisteil
- 14: Hindernisteil
- 15: Hindernisflächenbereich
- 16: Hindernisflächenbereich
- 17: Hindernisflächenbereich
- 18: Bürste
- 19: Rad
- 20: Öffnung

- a: Abstand

## Patentansprüche

1. Verfahren zum Erstellen einer Umgebungskarte für ein selbsttätig verfahrbares Bearbeitungsgerät (1), insbesondere Reinigungsroboter, wobei eine Detektionseinrichtung (2) des Bearbeitungsgerätes (1) Hindernisse (3, 4, 5) in der Umgebung des Bearbeitungsgerätes (1) detektiert und eine Umgebungskarte des Bearbeitungsgerätes (1) anhand detektierter Hindernisdaten der Hindernisse (3, 4, 5) erstellt wird, wobei mindestens ein Zusatzsensor (6) Hindernisse (3, 4, 5) in der Umgebung des Bearbeitungsgerätes (1) detektiert, wobei der Abstand des Zusatzsensors (6) zu dem Bearbeitungsgerät (1) verändert wird und wobei die von dem Zusatzsensor (6) detektierten Hindernisdaten mit den von der Detektionseinrichtung (2) des Bearbeitungsgerätes (1) detektierten Hindernisdaten in der Umgebungskarte kombiniert werden, **dadurch gekennzeichnet, dass** ein Abstand (a) zwischen der Detektionseinrichtung (2) des Bearbeitungsgerätes (1) und dem Zusatzsensor (6) gemessen wird, wobei der Abstand (a) von dem Zusatzsensor (6) gemessen wird, während der Zusatzsensor (6) ausgehend von dem Ort der Detektionseinrichtung (2) an eine gewünschte Position verlagert wird.

2. Verfahren nach Anspruch 1, **dadurch gekennzeichnet, dass** der Zusatzsensor (6) die Hindernisse (3, 4, 5) aus einer von der Perspektive der Detektionseinrichtung (2) des Bearbeitungsgerätes (1) abweichenden Perspektive, insbesondere in einer Draufsicht auf die Hindernisse (3, 4, 5), detektiert.

3. Verfahren nach Anspruch 1 oder 2, **dadurch gekennzeichnet, dass** der Zusatzsensor (6) Bilddaten der Umgebung des Bearbeitungsgerätes (1) erfasst.

4. Verfahren nach einem der vorhergehenden Ansprüche, **dadurch gekennzeichnet, dass** der Abstand (a) mittels eines Beschleunigungssensors des Zusatzsensors (6) ermittelt wird.

5. Verfahren nach einem der vorhergehenden Ansprüche, **dadurch gekennzeichnet, dass** der Abstand (a) anhand einer Größe des Bearbeitungsgerätes (1) in einem mittels des Zusatzsensors (6) erfassten Bild ermittelt wird.

6. Verfahren nach einem der vorhergehenden Ansprüche, **dadurch gekennzeichnet, dass** der Zusatzsensor (6) bezogen auf eine vertikale Richtung in einer Ebene (7) über einer Detektionsebene (8) der Detektionseinrichtung (2) des Bearbeitungsgerätes (1) angeordnet wird, insbesondere an einer Wand oder einer Decke eines Raumes.

7. Verfahren nach einem der vorhergehenden Ansprüche, **dadurch gekennzeichnet, dass** der Zusatzsensor (6) eine oder mehrere der folgenden Hindernisdaten detektiert: Anzahl der Hindernisse (3, 4, 5), absolute und/oder relative Position eines Hindernisses (3, 4, 5), Größe eines Hindernisses (3, 4, 5), Form eines Hindernisses (3, 4, 5), Farbe eines Hindernisses (3, 4, 5).

8. System zum Erstellen einer Umgebungskarte für ein selbsttätig verfahrbares Bearbeitungsgerät (1), insbesondere Reinigungsroboter, welches System ein Bearbeitungsgerät (1) mit einer Detektionseinrichtung (2) zur Detektion von Hindernissen (3, 4, 5) in der Umgebung des Bearbeitungsgerätes (1) sowie mindestens einen zu dem Bearbeitungsgerät (1) beabstandbaren Zusatzsensor (6) zur Detektion von Hindernissen (3, 4, 5) in der Umgebung des Bearbeitungsgerätes (1) aufweist, wobei das System eine Datenverarbeitungseinrichtung aufweist, welche Kommunikationsverbindungen zu der Detektionseinrichtung (2) und dem Zusatzsensor (6) aufweist und welche eingerichtet ist, von dem Zusatzsensor (6) detektierte Hindernisdaten mit von der Detektionseinrichtung (2) detektierten Hindernisdaten zu einer gemeinsamen Umgebungskarte zu kombinieren, **dadurch gekennzeichnet, dass** der Zusatzsensor (6) eingerichtet ist, einen Abstand (a) zwischen der Detektionseinrichtung (2) des Bearbeitungsgerätes (1) und dem Zusatzsensor (6) zu messen, während der Zusatzsensor (6) ausgehend von dem Ort der Detektionseinrichtung (2) an eine gewünschte Position verlagert wird.

## Claims

1. A method for generating an environment map for an automatically movable processing device (1), in particular for a cleaning robot, wherein a detection device (2) of the processing device (1) detects obstacles (3, 4, 5) in the environment of the processing device (1) and generates an environment map of the processing device (1) based on detected obstacle data of the obstacles (3, 4, 5), wherein at least one additional sensor (6) detects obstacles (3, 4, 5) in the environment of the processing device (1), wherein the distance between the additional sensor (6) and processing device (1) is varied, and wherein the obstacle data detected by the additional sensor (6) are combined with the obstacle data detected by the detection device (2) of the processing device (1) in the environment map, **characterized in that** a distance (a) between the detection device (2) of the processing device (1) and the additional sensor (6) is measured wherein the distance (a) is measured from the additional sensor (6) while the additional sensor (6) is shifted from the location of the detection device (2) to a desired position.

2. The method according to claim 1, **characterized in that** the additional sensor (6) detects the obstacles (3, 4, 5) from a perspective deviating from the perspective of the detection device (2) of the processing device (1), in particular in a top view of the obstacles (3, 4, 5).

3. The method according to claim 1 or 2, **characterized in that** the additional sensor (6) detects image data of the environment of the detection device (1).

4. The method according to one of the preceding claims, **characterized in that** the distance (a) is determined in particular by means of an acceleration sensor of the additional sensor (6)

5. The method according to one of the preceding claims, **characterized in that** the distance (a) is determined based on the size of the processing device (1) in an image detected by means of the additional sensor (6).

6. The method according to one of the preceding claims, **characterized in that** the additional sensor (6) is arranged in a plane (7) above a detection plane (8) of the detection device (2) of the processing device (1) relative to a vertical direction, in particular on a wall or a ceiling of a room.

7. The method according to one of the preceding claims, **characterized in that** the additional sensor (6) detects one or several of the following obstacle data: Number of obstacles (3, 4, 5), absolute and/or relative position of an obstacle (3, 4, 5), size of an obstacle (3, 4, 5), shape of an obstacle (3, 4, 5), color of an obstacle (3, 4, 5).

8. A system for generating an environment map for an automatically movable processing device (1), in particular a cleaning robot, wherein the system has a processing device (1) with a detection device (2) for detecting obstacles (3, 4, 5) in the environment of the processing device, and has at least one additional sensor (6)which can be brought into a distance, for detecting obstacles (3, 4, 5) in the environment of the processing device (1), wherein the system has a data processing device, which has communication links with the detection device (2) and the additional sensor (6), and which is set up to combine obstacle data detected by the additional sensor (6) with obstacle data detected by the detection device (2) to yield a common environment map, **characterized in that** an additional sensor is set up to measure the distance (a) between the detection device (2) of the processing device (1) and the additional sensor (6), while the additional sensor (6) is shifted from the location of the detection device (2) to a desired position.

## Revendications

1. Procédé d'établissement d'une carte d'environnement pour un dispositif de traitement à déplacement automatique (1), en particulier un robot de nettoyage, dans lequel un dispositif de détection (2) du dispositif de traitement (1) détecte des obstacles (3, 4, 5) dans l'environnement du dispositif de traitement (1) et une carte de l'environnement du dispositif de traitement (1) est établie sur la base de données d'obstacles détectées concernant les obstacles (3, 4, 5), dans lequel au moins un capteur supplémentaire (6) détecte des obstacles (3, 4, 5) dans l'environnement du dispositif de traitement (1), dans lequel la distance du capteur supplémentaire (6) par rapport au dispositif de traitement (1) est modifiée et dans lequel les données d'obstacles détectées par le capteur supplémentaire (6) sont combinées avec les données d'obstacles détectées par le dispositif de détection (2) du dispositif de traitement (1) dans la carte de l'environnement, **caractérisé en ce qu'**une distance (a) est mesurée entre le dispositif de détection (2) du dispositif de traitement (1) et le capteur supplémentaire (6), la distance (a) étant mesurée par le capteur supplémentaire (6) pendant que le capteur supplémentaire (6) est déplacé vers une position souhaitée à partir de l'emplacement du dispositif de détection (2).

2. Procédé selon la revendication 1, **caractérisé en ce que** le capteur supplémentaire (6) détecte les obstacles (3, 4, 5) suivant une perspective différente de celle du dispositif de détection (2) du dispositif de traitement (1), en particulier dans une vue de dessus des obstacles (3, 4, 5).

3. Procédé selon la revendication 1 ou 2, **caractérisé en ce que** le capteur supplémentaire (6) acquière des données d'image de l'environnement du dispositif de traitement (1).

4. Procédé selon l'une des revendications précédentes, **caractérisé en ce que** la distance (a) est déterminée au moyen d'un capteur d'accélération du capteur supplémentaire (6).

5. Procédé selon l'une des revendications précédentes, **caractérisé en ce que** la distance (a) est déterminée sur la base d'une taille du dispositif de traitement (1) dans une image acquise au moyen du capteur supplémentaire (6).

6. Procédé selon l'une des revendications précédentes, **caractérisé en ce que** le capteur supplémentaire (6) est agencé, par rapport à une direction verticale, dans un plan (7) au-dessus d'un plan de détection (8) du dispositif de détection (2) du dispositif de traitement (1), en particulier sur un mur ou un plafond d'une pièce.

7. Procédé selon l'une des revendications précédentes, **caractérisé en ce que** le capteur supplémentaire (6) détecte une ou plusieurs des données d'obstacles suivantes : nombre d'obstacles (3, 4, 5), position absolue et/ou relative d'un obstacle (3, 4, 5), taille d'un obstacle (3, 4, 5), forme d'un obstacle (3, 4, 5), couleur d'un obstacle (3, 4, 5).

8. Système d'établissement d'une carte d'environnement pour un dispositif de traitement à déplacement automatique (1), en particulier un robot de nettoyage, lequel système comporte un dispositif de traitement (1) avec un dispositif de détection (2) pour détecter des obstacles (3, 4, 5) dans l'environnement du dispositif de traitement (1) et au moins un capteur (6) supplémentaire qui peut être espacé du dispositif de traitement (1), pour détecter des obstacles (3, 4, 5) dans l'environnement du dispositif de traitement (1), dans lequel le système comporte un dispositif de traitement de données qui dispose de liaisons de communication avec le dispositif de détection (2) et le capteur supplémentaire (6) et qui est conçu pour combiner les données d'obstacles détectées par le capteur supplémentaire (6) avec les données d'obstacles détectées par le dispositif de détection (2) pour former une carte commune de l'environnement, **caractérisé en ce que** le capteur supplémentaire (6) est conçu pour mesurer une distance (a) entre le dispositif de détection (2) du dispositif de traitement (1) et le capteur supplémentaire (6) pendant que le capteur supplémentaire (6) est déplacé vers une position souhaitée à partir de l'emplacement du dispositif de détection (2).
